# EUROPÄISCHE PATENTSCHRIFT

(11) **EP 1 567 247 B1**
(45) Veröffentlichungstag und Bekanntmachung des Hinweises auf die Patenterteilung: **23.05.2012**
(21) Anmeldenummer: 03779864.2
(22) Anmeldetag: 07.11.2003
(51) Int. Cl.: B01D 53/94, F01N 3/022, F01N 3/035

(54) **PARTIKELFALLE MIT BESCHICHTETER FASERLAGE**
PARTICLE TRAP WITH COATED FIBRE LAYER
PIEGE A PARTICULES MUNI D'UNE COUCHE DE FIBRES ENDUITE

(30) Priorität: 05.12.2002 DE 10257113
(43) Veröffentlichungstag der Anmeldung: 31.08.2005
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Kahlhöfer, Hermann
(86) Internationale Anmeldenummer: PCT/EP2003/012455
(87) Internationale Veröffentlichungsnummer: WO 2004/050219

(56) Entgegenhaltungen:
- EP-A- 0 035 053
- EP-A- 0 798 452
- WO-A-01/92692
- WO-A1-01/12320
- DE-A- 3 545 762

## Beschreibung

Die Erfindung betrifft eine Partikelfalle zur Reinigung von Abgasen mobiler Verbrennungskraftmaschinen mit einer hochtemperaturfesten Faserlage.

Betrachtet man die Reinigung von Abgasen, insbesondere von Dieselmotoren, so lassen sich Kohlenwasserstoffe (HC) wie auch Kohlenmonoxide (CO) im Abgas in bekannter Weise oxidieren, indem diese beispielsweise mit Komponenten in Kontakt gebracht werden, die ggf. eine katalytisch aktiven Oberfläche aufweisen. Die Reduktion von Stickoxiden (NOₓ) unter sauerstoffreichen Bedingungen ist allerdings schwieriger. Ein Drei-Wege-Katalysator, wie er beispielsweise bei Otto-Motoren eingesetzt wird, bringt allein für Dieselmotoren nicht die gewünschten Effekte. Aus diesem Grunde wurde beispielsweise das Verfahren der Selektiven Katalytischen Reduktion (SCR: "selective catalytic reduction") entwickelt.

Weiterhin wurden Speicherkatalysatoren auf ihren Einsatz im Hinblick auf die Stickoxid-Reduktion erprobt. Die Beschichtung eines Speicherkatalysators enthält außer den üblichen Edelmetall-Komponenten noch Bariumkarbonat oder -oxid. Dadurch ist es möglich, dass bei Sauerstoffüberschuss NOₓ gespeichert werden kann. Auf den Edelmetallkomponenten wird das Stickstoffmonoxid (NO) aus dem Abgas zu Stickstoffdioxid (NO₂) oxidiert. Dieses wird dann unter Bildung von Bariumnitrat auf den Katalysator gespeichert. Bei dieser Speicherung bildet sich auf dem Barium-Kom eine Nitrat-Schicht, die die Speicherung verlangsamt, weil NO₂ für eine weitere Speicherung durch diese Schicht hindurchdringen muss. Da die Speicherkapazität also begrenzt ist, muss der Katalysator in regelmäßigen Abständen regeneriert werden. Dies geschieht beispielsweise durch kurzes Anfetten des Abgases, d. h. durch eine kurze Periode mit unterstöchiometrischen Bedingungen. In reduzierter Atmosphäre wandelt sich das Nitrat wieder zu (z. B.) Karbonat um und Stickstoffmonoxid wird frei. Dieses wird sofort zu Stickstoff reduziert. Da die Regeneration schneller abläuft als die Speicherung, können die Regenerationsperioden wesentlich kürzer sein als die Speicherperioden.

Zur Reduktion von Partikel-Emissionen sind Partikelfallen bekannt, welche aus einem keramischen Substrat aufgebaut sind. Diese weisen Kanäle auf, so dass das zu reinigende Abgas in die Partikelfalle einströmen kann. Benachbarte Kanäle sind wechselseitig verschlossen, so dass das Abgas auf der Eintrittsseite in den Kanal eintritt, durch eine keramische Wand hindurchtritt und durch einen benachbarten Kanal auf der Austrittsseite wieder entweicht. Derartige Filter erreichen eine Effektivität von ca. 95 % über die gesamte Breite der auftretenden Partikelgrößen.

Zusätzlich zu chemischen Wechselwirkungen mit Additiven und speziellen Beschichtungen stellt die sichere Regeneration des Filters im Abgassystem eines Automobils immer noch ein Problem dar. Die Regeneration der Partikelfalle ist erforderlich, da die zunehmende Ansammlung von Partikelteilchen in den zu durchströmenden Kanalwänden einen stetig steigenden Druckverlust zur Folge hat, der negative Auswirkungen auf die Motorleistung hat. Die Regeneration umfasst im wesentlichen das kurzzeitige Aufheizen der Partikelfalle bzw. der darin angesammelten Partikel, so dass die Rußpartikel in gasförmige Bestandteile umgesetzt werden. Dies kann beispielsweise auch dadurch erreicht werden, dass mit Hilfe einer vorgeschalteten exothermen Reaktion (z.B. Oxidation von zusätzlich in die Angasleitung eingespritztem Kraftstoff in einem Oxidationskatalysator ("Nachverbrennung")) das Abgas kurzzeitig die Temperaturen erreicht, die ausreichen, die in der Partikelfalle haftenden Partikel umzuwandeln. Diese hohe thermische Beanspruchung der Partikelfalle hat allerdings negative Auswirkungen auf die Lebensdauer.

Zur Vermeidung dieser diskontinuierlichen und thermisch sehr verschleißfördernden Regeneration wurde ein System zur kontinuierlichen Regeneration von Filtern entwickelt (CRT: "continuous regeneration trap"). In einem solchen System werden die Partikel bei Temperaturen bereits oberhalb von 200°C mittels Oxidation mit NO₂ verbrannt. Das hierzu erforderliche NO₂ wird häufig durch einen Oxidationskatalysator erzeugt, der stromaufwärts vor der Partikelfalle angeordnet ist. Hierbei stellt sich jedoch gerade im Hinblick auf die Anwendung bei Kraftfahrzeugen mit Diesel-Kraftstoff das Problem, dass nur ein unzureichender Anteil von Stickstoffmonoxid (NO) im Abgas existiert, welcher zu dem gewünschten Stickstoffdioxid (NO₂) umgewandelt werden kann. Infolgedessen kann bislang nicht sichergestellt werden, dass eine kontinuierliche Regeneration der Partikelfalle im Abgassystem stattfindet.

Es ist weiter zu berücksichtigen, dass neben nichtumwandelbaren Partikeln auch Öl oder zusätzliche Rückstände von Additiven in einer Partikelfalle angelagert werden, die nicht ohne weiteres regeneriert werden können. Aus diesem Grund müssen bekannte Filter in regelmäßigen Abständen ausgetauscht und/oder gewaschen werden.

Zusätzlich zu einer minimalen Reaktionstemperatur und einer spezifischen Verweildauer muss zur kontinuierlichen Regeneration von Partikeln mit NO₂ ausreichend Stickoxid zur Verfügung gestellt werden. Tests bezüglich der dynamischen Emission von Stickstoffmonoxid (NO) und Partikeln haben klar hervorgebracht, dass die Partikel gerade dann emittiert werden, wenn kein oder nur sehr wenig Stickstoffmonoxid im Abgas vorhanden ist und umgekehrt. Daraus folgt, dass ein Filter mit realer kontinuierlicher Regeneration im wesentlichen als Kompensator oder Speicher fungieren muss, so dass gewährleistet ist, dass die beiden Reaktionspartner zu einem gegebenen Zeitpunkt gleichzeitig in den benötigten Mengen im Filter vorhanden sind. Weiterhin ist der Filter möglichst nahe an der Verbrennungskraftmaschine anzuordnen, um bereits unmittelbar nach dem Kaltstart möglichst hohe Temperaturen annehmen zu können. Zur Bereitstellung des erforderlichen Stickstoffdioxides ist dem Filter ein Oxidationskatalysator vorzuschalten, welcher Kohlenmonoxid (CO) und Kohlenwasserstoffe (HC) umsetzt und insbesondere auch Stickstoffmonoxid (NO) in Stickstoffdioxid (NO₂) konvertiert. Bei einer motornahen Anordnung dieses Systems aus Oxidationskatalysator und Filter ist insbesondere die Position vor einem Turbolader geeignet, der bei Diesel-Kraftfahrzeugen häufig zur Erhöhung des Ladedrucks in der Brennkammer verwendet wird.

Betrachtet man diese grundsätzlichen Überlegungen, so stellt sich für den tatsächlichen Einsatz im Automobilbau die Frage, wie ein derartiger Filter aufgebaut ist, der in einer solchen Position und in Anwesenheit extrem hoher thermischer und dynamischer Belastungen einen zufrieden stellenden Filterwirkungsgrad aufweist. Dabei sind insbesondere die räumlichen Gegebenheiten zu berücksichtigen, die ein neues Konzept für Filter bedingen. Während bei den klassischen Filtern, welche im Unterboden eines Kfzs angeordnet wurden, ein möglichst großes Volumen im Vordergrund stand, um eine hohe Verweilzeit der noch nicht umgesetzten Partikel im Filter und somit eine hohe Effizienz zu gewährleisten, besteht bei einer motornahen Anordnung nicht genügend Platz bzw. Raum zur Verfügung.

Hierzu wurde ein neues Konzept entwickelt, welches im wesentlichen unter dem Begriff "offenes Filtersystem" bekannt geworden ist. Diese offenen Filtersysteme zeichnen sich dadurch aus, dass auf ein konstruktives, wechselseitiges Verschließen der Filterkanäle verzichtet werden kann. Dabei wird vorgesehen, dass die Kanalwände zumindest teilweise aus porösem oder hochporösem Material aufgebaut sind und dass die Strömungskanäle des offenen Filters Umlenk- oder Leitstrukturen aufweist. Diese Einbauten bewirken, dass die Strömung bzw. die darin enthaltenen Partikel hin zu den Bereichen aus porösem oder hochporöserem Material gelenkt werden. Dabei hat sich überraschenderweise herausgestellt, dass die Partikel durch Interception und/oder Impaktion an und/oder in der porösen Kanalwand haften bleiben. Für das Zusammenkommen dieser Wirkung sind die Druckunterschiede im Strömungsprofil des strömenden Abgases von Bedeutung. Durch die Umlenkung können zusätzlich lokale Unterdruck- oder Überdruckverhältnisse entstehen, die zu einem Filtrationseffekt durch die poröse Wand hindurch führen, da die obengenannten Druckunterschiede ausgeglichen werden müssen.

Die Partikelfalle ist dabei im Gegensatz zu den bekannten geschlossenen Sieb- oder Filtersystemen offen, weil keine Strömungssackgassen vorgesehen sind. Diese Eigenschaft kann somit auch zur Charakterisierung derartiger Partikelfilter dienen, so dass beispielsweise der Parameter "Strömungsfreiheit" zur Beschreibung geeignet ist. So bedeutet eine "Strömungsfreiheit" von 20 %, dass in einer Querschnittsbetrachtung ca. 20 % der Fläche durchschaubar sind. Bei einem Partikelfilter mit einer Kanaldichte von ca. 600 cpsi ("cells per square inch") mit einem hydraulischen Durchmesser von 0,8 mm entspräche diese Strömungsfreiheit einer Fläche von über 0,1 mm². Mit anderen Worten bedeutet dies, dass eine Partikelfalle dann als offen zu bezeichnen ist, wenn er grundsätzlich von Partikeln vollständig durchlaufen werden kann, und zwar auch von Partikeln, die erheblich größer als die eigentlich herauszufilternden Partikel sind (insbesondere der für den Diesel- und/oder Benzinkraftstoff charakteristische Partikelgrößenbereich). Dadurch kann ein solcher Filter selbst bei einer Agglomeration von Partikeln während des Betriebes, nicht verstopfen. Ein geeignetes Verfahren zur Messung der Offenheit von Partikelfallen ist beispielsweise die Prüfung, bis zu welchem Durchmesser kugelförmige Partikel noch durch einen solchen Filter rieseln können. Bei vorliegenden Anwendungsfällen ist eine Partikelfalle insbesondere dann "offen", wenn Kugeln von größer oder gleich 0,1 mm Durchmesser noch hindurchrieseln können, vorzugsweise Kugeln mit einem Durchmesser oberhalb von 0,2 mm. Solche "offenen" Filterelemente gehen beispielsweise aus den Dokumenten DE 201 17 873 U1, DE 201 17 659 U1, WO 02/00326, WO 01/92692, WO 01/80978 hervor, deren Offenbarungsinhalt hiermit vollständig zum Gegenstand der vorliegenden Beschreibung gemacht ist.

Im Hinblick auf die allgemeine Ausgestaltung von Wabenkörpern mit internen Strömungsleitflächen gibt beispielsweise das deutsche Gebrauchsmuster DE 89 08 738 U1 Hinweise. Dieses Dokument beschreiben Wabenkörper, insbesondere Katalysator-Trägerkörper für Kraftfahrzeuge, aus lagenweise angeordneten, zumindest in Teilbereichen strukturierten Blechen, welche die Wände einer Vielzahl von für ein Fluid durchströmbare Kanäle bilden. Dort wird beschrieben, dass in den meisten Anwendungsfällen und bei den üblichen Dimensionierungen solcher Wabenkörper die Strömung in den Kanälen im wesentlichen laminar ist, d. h. sehr kleine Kanalquerschnitte verwendet werden. Unter diesen Bedingungen bauen sich an den Kanalwänden relativ dicke Grenzschichten auf, welche einen Kontakt der Kernströmung in den Kanälen mit den Wänden verringern. Um eine Verwirbelung des Abgasstromes im Inneren der Kanäle zu bewirken und somit einen intensiven Kontakt des gesamten Abgasstromes mit einer katalytisch aktiven Oberfläche der Kanäle zu gewährleisten, werden hier Umstülpungen vorgeschlagen, die im Inneren des Kanals Anströmflächen bilden, so dass das Abgas quer zur Hauptströmungsrichtung abgelenkt wird.

Aus EP 0 798 452 A ist ein wechselseitig geschlossener Partikelfilter bekannt, der eine Filterlage aufweist. Die_Filterlage umfasst ein Filtermaterial, das beidseitig von Katalysator tragenden Schichten bedeckt sein kann.

WO 01/92692 A offenbart die Anordnung_ einer offenen Partikelfalle in einer Abgasanlage. Die Partikelfalle kann dabei mit einer Hydrolysebeschichtung ausgeführt sein.

Gerade im Hinblick auf die Realisierung einer solchen offenen Partikelfalle ist es nunmehr Aufgabe der vorliegenden Erfindung, die Effektivität im Hinblick auf die Umsetzung von im Abgas enthaltenen Schadstoffen zu verbessern. Insbesondere soll die Möglichkeit eröffnet werden, Abgasanlagen insbesondere für Automobile mit Dieselmotor von besonders kleiner Bauart bereitzustellen. Zudem soll die Fertigung, die Montage und die Wartung derartiger Abgasanlagen deutlich vereinfacht und damit kostengünstiger gestaltet werden.

Diese Aufgaben werden gelöst durch eine Partikelfalle zur Reinigung von Abgasen einer Verbrennungskraftmaschine mit einer hochtemperaturfeste Faserlage mit den Merkmalen des Patentanspruchs 1. Weitere vorteilhafte Ausgestaltungen sind in den abhängigen Patentansprüchen beschrieben, wobei die dort aufgezeigten Merkmale einzeln oder in jeder beliebigen, sinnvollen Kombination miteinander auftreten können.

Gemäß der Erfindung wird eine Partikelfalle zur Reinigung von Abgasen mobiler Verbrennungskraftmaschinen vorgeschlagen, welche zumindest eine, teilweise strukturierte Metallfolie und zumindest eine hochtemperaturfeste Faserlage nach der oben beschriebenen Bauart hat, wobei bevorzugt mehrere strukturierte Metallfolien und mehrere Faserlagen abwechselnd zueinander und insbesondere miteinander gewunden in einem Gehäuse angeordnet sind. Dabei ist eine "offene" Partikelfalle gebildet, wie sie eingangs beschrieben wurde. Demnach ist es sonders vorteilhaft, ein "offenes" Filterelement zu bilden, wie es in den Dokumenten DE 201 17 873 U1, DE 201 17 659 U1, WO 02/00326, WO 01/92692, WO 01/80978 beschrieben ist.

Die Partikelfalle bildet im wesentlichen parallel zur Achse verlaufende Kanäle, wobei Leitflächen der Metallfolie in zumindest einen Teil der Kanäle hineinragen und eine Umlenkung von durch die Kanäle strömenden Gasen hin zur Faserlage bewirken. Derartige Leitflächen können durch Vorsprünge, Noppen, Mikrowellungen, Schaufeln oder ähnliche Strukturen gebildet sein. Es ist auch möglich, dass diese Leitflächen durch Kanten von Löchern in derartigen Metallfolien gebildet sind. Die Leitflächen selbst können ebenfalls Löcher aufweisen.

Die hochtemperaturfeste Faserlage aus Metall für die Partikelfalle zur Reinigung von Abgasen mobiler Verbrennungskraftmaschinen zeichnet sich dadurch aus, dass zumindest in einem Abschnitt eine Beschichtung vorgesehen ist, die zumindest teilweise der eines Oxidationskatalysators und/oder eines 3-Wege-Katalysators und/oder eines SCR-Katalysators entspricht.

Die Vorsehung einer solchen katalytisch aktiven Beschichtung hat eine Vielzahl von Vorteilen, die anschließend kurz umrissen werden sollen. So kann beispielsweise erreicht werden, dass die ursprünglich im Abgassystem vorgesehenen Komponenten zur Oxidation bzw. Reduktion und/oder Speicherung von im Abgas enthaltenen Schadstoffen kleinvolumiger ausgeführt werden können oder sogar ganz auf sie verzichtet werden kann. Dies hat zur Folge, dass das Abgassystem als solches deutlich schlanker bzw. kleiner ausgeführt werden kann, wodurch ein einfacher Aufbau, eine einfache Instandhaltung und eine kostengünstige Herstellung des Abgassystems ermöglicht wird. Zudem werden überraschenderweise auch synergetische Effekte bewirkt. So werden beispielsweise direkt im Inneren einer mit einer solche Faserlage ausgestatteten Partikelfalle Abgasbestandteile generiert, die bei der Umsetzung bzw. Beseitigung der angelagerten Partikel behilflich sind. Diese Abgasbestandteile werden also nahe der Oberfläche der Faserlage, an der die Partikel haften, direkt erzeugt und bereitgestellt Somit kann beispielsweise die Regenerierungstemperatur der Partikelfalle auch deutlich gesenkt werden, zum Beispiel von über 900 °C auf Temperaturen unterhalb von 600 °C.

Im Hinblick auf die Anordnung des mindestens einen Abschnitts der Faserlage sei angemerkt, dass sich dieser Abschnitt auch über die gesamte Oberfläche der Faserlage erstrecken kann. Es ist jedoch auch möglich, mehrere Abschnitte vorzusehen, wobei diese beschichtet und/oder teilweise auch unbeschichtet sein können, wobei ggf. auch unterschiedliche Beschichtungsarten, voneinander verschiedene Abschnittsformen oder Abschnittsflächeninhalte gewählt werden können. Es ist auch möglich, dass sich der mindestens eine Abschnitt nur auf einer Außenfläche bzw. -seite der hochtemperaturfesten Faserlage befindet.

Im Hinblick auf die Eigenschaften der Beschichtung eines Oxidationskatalysators ist festzuhalten, dass solche Katalysatoren dazu dienen, die Geschwindigkeit bestimmter Reaktion zu erhöhen, ohne dabei selbst verbraucht zu werden. Durch geeignete Katalysatorsubstanzen kann erreicht werden, dass die Oxidationsvorgänge für CO (Kohlenmonoxid) und HC (Kohlenwasserstoffe) im Abgas bei tieferen Temperaturen ablaufen. Mit Hilfe derartiger Beschichtungen, die in der Regel Katalysatorsubstanzen der Platingruppe enthalten, können gasförmige Kohlenwasserstoffe und Kohlenmonoxid bei Abgastemperaturen schon oberhalb von 250 °C im dieselmotorischen Abgas oxidiert werden. Eine Besonderheit derartiger Oxidationsbeschichtungen ist darin zu sehen, dass hier unter Umständen eine Nachverbrennung der noch an Rußpartikeln anlagernden Kohlenwasserstoffe stattfindet, wodurch die Partikelemission weiter reduziert werden kann. Bislang hatte man sich gescheut, eine derartige Kombination von oxidationsfördernden Beschichtungen und Filterelementen in einer Einheit vorzusehen, da befürchtet wurde, dass die katalytisch aktiven Substanzen aufgrund einer zunehmenden Abdeckung mit Partikeln beeinträchtigt werden würden. Von diesem Vorurteil der Fachwelt wurde bei der Erfindung abgewichen und eine hochtemperaturfeste Faserlage entwickelt, die die Herstellung von besonders effektiven Partikelfallen ermöglicht.

Sollen die drei Schadstoffkomponenten CO, HC und NOₓ (Stickoxide) durch Nachreaktion vermindert werden, so kann dies durch eine Beschichtung der Faserlage mit einer solchen des 3-Wege-Katalysators erreicht werden. Die wirksame Katalysatorsubstanz umfasst dabei Platin- (Pt), Palladium- (Pd) bzw. Rhodiummetall (Rh) in feiner Verteilung auf einer großen Oberfläche. Bei einem Lambdawert von 1 wird CO zu Kohlendioxid (CO₂), CH zu CO₂ und Wasser (H₂O) oxidiert und NOₓ zu Stickstoff (N₂) reduziert. Dabei bietet sich folgende Beschichtung hinsichtlich des Oxidationskatalysators an:
Pt/Pd = 2/1
0,93 - 1,2 Gramm Pt/Liter_{Katalysatorträgervolumen}
0,46 - 0,6 Gramm Pd/Liter_{Katalysatorträgervolumen}

Betreffend den Multifunktionskatalysator (Reduktion) wird vorgeschlagen, dass folgende Beziehungen gelten:
Pt/Rh = 5/1
1,16-1,5 Gramm Pt/Liter_{Katalysatorträgervolumen}
1,23 - 0,3 Gramm Rh/Liter_{Katalysatorträgervolumen}

Unter Katalysatorträgerkörpervolumen wird das Volumen verstanden, welches das Material des Trägers (Wabenstruktur, etc) und die vom Träger gebildeten Hohlräume, Kanäle usw. umfasst.

Die Beschichtung eines SCR-Katalysators kann ggf. auch mehrschichtig bzw. mehrstufig ausgebildet sein. Ein mögliches Harnstoff-SCR-Katalysatorsystem besteht aus mehreren hintereinander angeordneten Teilbereichen der Beschichtung, die auf die Faserlage aufgetragen ist. Die Teilbereiche können dabei in Strömungsrichtung des Abgases folgendermaßen angeordnet sein:
- eine Beschichtung eines Oxidationskatalysators (optional),
- die Beschichtung eines Hydrolysekatalysators,
- die Beschichtung eines SCR-Katalysators und
- ggf. ein nachgeschalteter Oxidationskatalysator.

Der optional vorgeschaltete Oxidationskatalysator dient zur Erhöhung der SCR-Aktivität bei tiefen Abgastemperaturen (insbesondere beim Diesel-Pkw). Durch eine Anhebung des NO₂-Anteils (Optimum: 50 Vol.-%) im Abgas mittels teilweiser Oxidation von NO kann die Reaktionsgeschwindigkeit der SCR-Reaktion in einem Temperaturbereich unterhalb von etwa 573 K deutlich gesteigert werden. Daneben erfolgt an der Katalysatoroberfläche die Oxidation von Kohlenmonoxid zu Kohlendioxid sowie die Reaktion von unvollständig verbrannten Kohlenwasserstoffen zu Kohlendioxid und Wasser. Ohne Einsatz eines solch vorgelagerten Bereichs mit einer Oxidationsbeschichtung würde die Oxidation der Kohlenwasserstoffe zum Teil am SCR-Katalysator erfolgen und somit eine Minderung des Stickstoffoxid-Umsatzes hervorrufen.

Mit Hilfe der Beschichtung eines Hydrolysekatalysators gelingt die vollständige Zersetzung einer wässrigen Harnstofflösung bereits bei niedrigen Temperaturen, z. B. um 470 K. Unterhalb von ca. 470 K erweist sich die Zersetzung des Harnstoffs als problematisch, da aufgrund einer unvollständigen Zersetzung unerwünschte Nebenprodukte entstehen können. Die Beschichtung des SCR-Katalysators dient zur selektiven Reduktion der Stickstoffoxide NOₓ mit Ammoniak zu den unproblematischen Produkten Stickstoff und Wasser.

Gemäß einer weiteren Ausgestaltung der Partikelfalle mit der hochtemperaturfesten Faserlage umfasst die Beschichtung Washcoat. Die Beschichtung der relativ glatten Oberflächen der Fasern mit Washcoat hat eine Vergrößerung der katalytisch aktiven Oberfläche zur Folge. Diese zerklüftete Oberfläche gewährleistet einerseits ein ausreichend großes Platzangebot für die Fixierung eines Katalysators (z.B. Platin, Rhodium etc.) und dient andererseits zur Verwirbelung des durchströmenden Abgases, wobei ein besonders intensiver Kontakt zum Katalysator bewirkt wird.

Das Auftragen der die Katalyse fördernden hochoberflächigen Washcoat-Schicht erfolgt bekanntermaßen in der Weise, dass die Faserlage (oder später die gesamte Partikelfalle aus Faserlagen und Metallfolien) in eine flüssigen Washcoat-Dispersion getaucht oder mit dieser besprüht wird. Anschließend wird die überschüssige Washcoat-Dispersion entfernt, der Washcoat in der Faserlage getrocknet und abschließend bei Temperaturen meist über 450 °C kalziniert. Während des Kalzinierens werden die flüchtigen Bestandteile der Washcoat-Dispersion ausgetrieben, so dass eine temperaturbeständige und katalysefördernde Schicht mit hoher spezifischer Oberfläche erzeugt wird. Gegebenenfalls wurde dieser Vorgang mehrfach wiederholt, um eine gewünschte Schichtdicke zu erreichen. Die mittlere Schichtdicke liegt dabei bevorzugt in einem Bereich von 0,001 bis 0,02 mm, insbesondere zwischen 0,005 und 0,012 mm.

Der Washcoat besteht gewöhnlich aus einer Mischung eines Aluminiumoxids und mindestens einem Promoteroxid wie beispielsweise Seltenerdoxiden, Zirkonoxid, Nickeloxid, Eisenoxid, Germaniumoxid und Bariumoxid. Die Washcoat-Dispersion muss dabei während des Auftragens auf den Wabenkörper eine möglichst gute Fließeigenschaft aufweisen, um eine gewünschte, gleichmäßige Schichtdicke über die gesamte Kanallänge zu erzielen.

Zur Erzielung einer derartigen Fließeigenschaft weisen bekannte Washcoat-Dispersionen einen bestimmten pH-Wert auf, wobei nur ein begrenzter Feststoffanteil erlaubt wird. Allerdings haben Versuche gezeigt, dass eine derartige Washcoat-Dispersion eine zeitabhängige Viskosität aufweist. Dies hat zur Folge, dass die Washcoat-Dispersion sehr rasch geliert und die Generierung einer gleichmäßigen Schichtdicke verhindert. Dieses Gelieren kann dadurch verzögert werden, dass die Washcoat-Dispersion in Bewegung gehalten wird, also entweder die Dispersion oder die damit benetzte Filterlage bewegt, insbesondere zum Vibrieren angeregt wird.

Gemäß noch einer weiteren Ausgestaltung der Partikelfalle mit der Faserlage besteht die Faserlage aus einem porösen Sinter- und/oder Faserwerkstoff (z.B. Stahl). Insbesondere bieten sich hier hochtemperaturfeste und korrosionsbeständige Stähle mit relativ hohen Anteilen von Chrom, Nickel, Aluminium und/oder Molybdän an. Dabei ist es besonders vorteilhaft, dass die Faserlage Fasern mit einem mittleren Durchmesser aufweist, der kleiner als 0,082 mm ist, insbesondere in einem Bereich von 0,01 bis 0,05 mm liegt. Um zu vermeiden, dass eine solche Filterlage einen hohen Staudruck im Abgasstrom erzeugt, wird vorgeschlagen, dass die Faserlage eine Porosität hat, die mindestens 50 % beträgt, insbesondere mindestens 75 %, bevorzugt mindestens 85 % und vorzugsweise sogar mindestens 95 %. In diesem Zusammenhang sei angemerkt, dass sich solche Faserlagen relativ gut mit Fasern einer gemittelten Länge von 0,4 mm bis 0,05 mm herstellen ließen, wobei bevorzugt kleinere Faserlängen bei dickeren Fasern zu wählen sind.

Weiter wird vorgeschlagen, dass die Faserlage in einem Längsschnitt im wesentlichen parallel zur größten Außenfläche Öffnungen hat, die im Mittel eine Ausdehnung von 0,01 mm bis 0,5 mm haben, insbesondere von 0,05 mm bis 0,25 mm. Grundsätzlich sei an dieser Stelle angemerkt, dass die Faserlage Fasern in nahezu beliebiger Anordnung aufweisen kann, insbesondere hierunter auch Wirrlagen, Gewebe oder ähnliche Strukturen zu verstehen sind. Dabei können regelmäßige Strukturen auch nur regional vorliegen, während in den restlichen Bereichen eine eher chaotische Anordnung der Fasern vorliegt.

Um sicherzustellen, dass ausreichend große Hohlräume für Partikel bzw. deren Agglomerate vorgesehen sind, wird hier gerade für die Anwendung in Abgassystemen von Dieselmotoren vorgeschlagen, dass eine gewisse Porengröße bereitgestellt wird. Zur Ermittlung der Porengröße dient hier ein Längsschnitt durch das Material, der kleine Querschnitte der Poren bzw. Hohlräume aufzeigt, die hier Öffnungen genannt sind. All diese Öffnungen haben im Mittel eine Ausdehnung im obengenannten Bereich. Dabei ist hier ein Mittelwert aller maximalen Ausdehnungen der im Längsschnitt erkennbaren Öffnungen gemeint. Da sich die Abmessung der Öffnung auf die bereits beschichtete Faserlage bezieht, kann auch ein entsprechender gemittelter Faserabstand herangezogen werden, der bevorzugt kleiner als 0,6 mm zu wählen ist, insbesondere zwischen 0,05 mm und 0,35 mm.

Weiter wird vorgeschlagen, dass die Faserlage eine Dicke hat, die kleiner 3 mm beträgt, insbesondere kleiner 1,5 mm, bevorzugt kleiner 0,5 mm und vorzugsweise kleiner 0,1 mm. Die hier genannten Dicken sind gerade im Hinblick auf den Einsatz der Faserlage für Partikelfallen zur Reinigung von Abgasen mobiler Verbrennungskraftmaschinen gewählt.

Gemäß einer weiteren Ausgestaltung hat die Partikelfalle ein Volumen, und die Beschichtungsmenge der Partikelfalle in Bezug auf dieses Volumen liegt im Bereich von 20 bis 300 g/l (Gramm pro Liter), bevorzugt sogar zwischen 50 und 120 g/l. Unter Volumen ist in diesem Zusammenhang das Volumen gemeint, welches sich aus den Metallfolien, den Faserlagen sowie den gebildeten Kanäle zusammensetzt. Üblicherweise liegt ein solches Volumen im Bereich von 0,01 bis 1,51, bevorzugt zwischen 0,3 1 und 0,81.

Weiterhin wird vorgeschlagen, dass die mindestens eine, zumindest teilweise strukturierte Metallfolie Durchbrüche aufweist, die sich über mindestens eine Strukturweite erstrecken, vorzugsweise sogar über 2, insbesondere 3 Strukturweiten. Das bedeutet, dass beispielsweise ein solcher Durchbruch mehrere durch die Struktur gebildete, benachbarte Kanäle miteinander verbindet. Auf diese Weise wird eine besonders effektive Durchmischung der Teilabgasströme gewährleistet, ohne dass vor der Partikelfalle ein unerwünscht hoher Staudruck erzeugt wird. Dabei sei noch angemerkt, dass sich die Durchbrüche im wesentlichen in der Ebene der Metallfolie erstrecken.

Die Erfindung wird nun anhand der Figuren näher erläutert. Dabei sei darauf hingewiesen, dass die Figuren besonders bevorzugte Ausführungsbeispiele der Erfindung zeigen, die Erfindung jedoch nicht darauf begrenzt ist. Es zeigen:
- Fig. 1: schematisch und in einer Explosionsdarstellung ein Detail einer Partikelfalle gemäß der Erfindung,
- Fig. 2: ein weiteres Detail einer Ausgestaltung der erfindungsgemäßen Partikelfalle,
- Fig. 3: schematisch eine Ausgestaltung eines Abgassystems einer mobilen Verbrennungskraftmaschine,
- Fig. 4: schematisch und perspektivisch eine weitere Ausgestaltung der erfindungsgemäßen Partikelfalle,
- Fig. 5: schematisch einen Längsschnitt durch eine Ausgestaltung der Faserlage, und
- Fig. 6: einen weiteren Längsschnitt einer Faserlage im beschichteten Zustand.

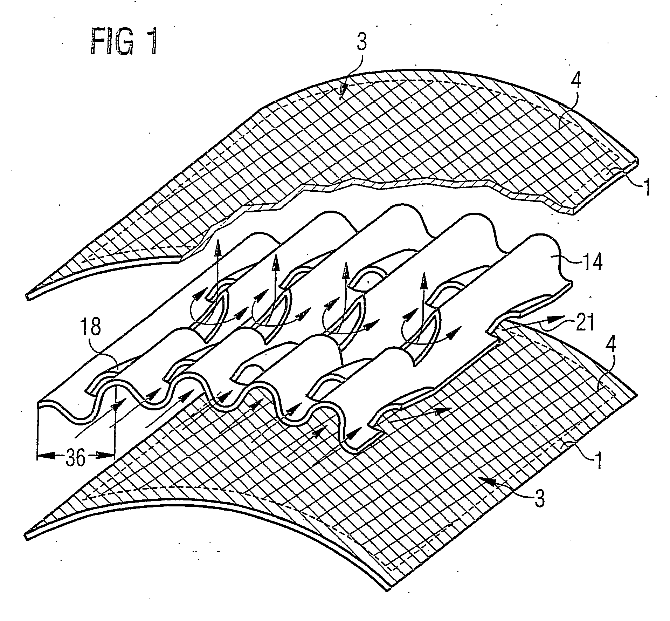

Fig. 1 zeigt schematisch und in einer Explosionsdarstellung ein Detail einer Partikelfalle, wie sie beispielsweise zur Abgasbehandlung von mobilen Verbrennungskraftmaschinen eingesetzt wird. Dargestellt sind zwei Faserlagen 1, zwischen die eine Metallfolie 14 angeordnet ist. Die Faserlagen 1 weisen jeweils einen Abschnitt 3 auf, in dem eine Beschichtung 4 angeordnet ist. Bei dieser Beschichtung 4 kann es sich um die eines Oxidationskatalysators, eines Drei-Wege-Katalysators und/oder eines SCR-Katalysators handeln. Bevorzugt weisen auch die Metallfolien 14 (zumindest in Teilbereichen) eine katalytisch aktive und/oder speichernde Beschichtung auf. Üblicherweise liegen die benachbarten Lagen aneinander an und sind bevorzugt fügetechnisch miteinander verbunden, insbesondere miteinander verlötet. Hierzu ist es beispielsweise erforderlich, einen Teilbereich, insbesondere den Rand der Faserlage 1 nicht zu beschichten, um hier die Möglichkeit zur Ausbildung fügetechnischer Verbindungen zu gewährleisten.

Die Strukturierung der Metallfolie 14 hat zur Folge, dass dieses "Sandwich" aus glatten Lagen (Faserlage 1) und Welllage (Metallfolie 14) für ein Abgas in einer Strömungsrichtung 21 durchströmt werden kann. Dabei sind Leitflächen 18 in den Kanälen 17 angebracht, die eine Verwirbelung der Teilgasströme zur Folge haben, so dass diese insbesondere gegen die beschichtete Faserlage 1 geleitet werden. Die Struktur der Metallfolie 14 ist hier eine Wellstruktur mit einer vorgegebenen Strukturweite 36. Bevorzugt sind die Leitflächen 18 bzw. darunterliegende Durchbrüche 19 größer ausgeführt, als die Strukturweite 36, so dass durch die Durchbrüche 19 mehrere benachbarte Kanäle 17 miteinander verbunden werden können.

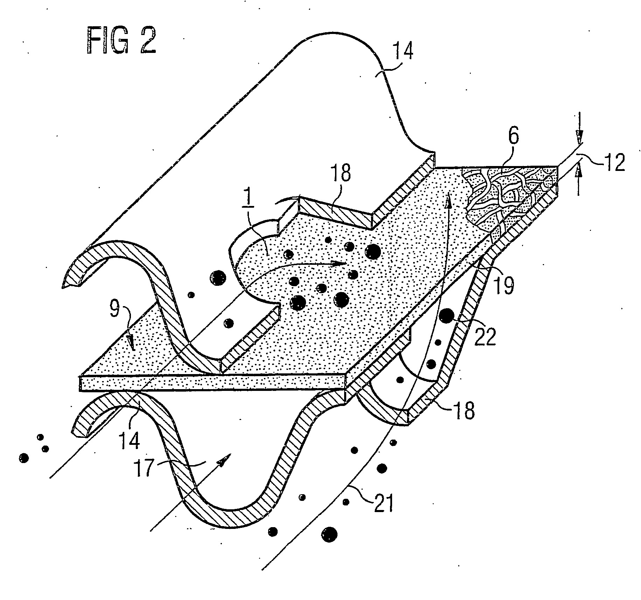

Fig. 2 zeigt eine Anordnung von Metallfolien 14 und einer Faserlage 1 im Detail. Wiederum sind die Metallfolien 14 und die Faserlage 1 abwechselnd angeordnet, wobei die Struktur der Metallfolien 14 in Verbindung mit der Faserlage 1 Kanäle 17 bildet, die für das Abgas in einer Strömungsrichtung 21 durchströmbar sind. In die Kanäle 17 hinein ragen Leitflächen 18, die durch Stanzen, Drücken oder auf andere Weise aus der Metallfolie 14 selbst hergestellt wurden. Dadurch sind gleichzeitig Durchbrüche 19 geschaffen, so dass von dem durch den einen Kanal 17 strömenden Gas eine Teilrandströmung "abgeschält" und zur Faserlage 1 hingeleitet werden kann. Auf diese Weise werden auch die Partikel 22 mitgerissen und zur Faserlage 1 geführt. Dort bleiben sie auf der Außenfläche 9 beispielsweise kleben oder lagern sich in Hohlräumen, Poren oder ähnlichen Öffnungen der Faserlage 1 an. Die hier dargestellte Faserlage 1 weist eine Mehrzahl chaotisch angeordneter Fasern 6 auf, die mit einer Beschichtung 4 versehen sind. Insgesamt hat die Faserlage 1 eine Dicke 12, die kleiner als 3 mm ist.

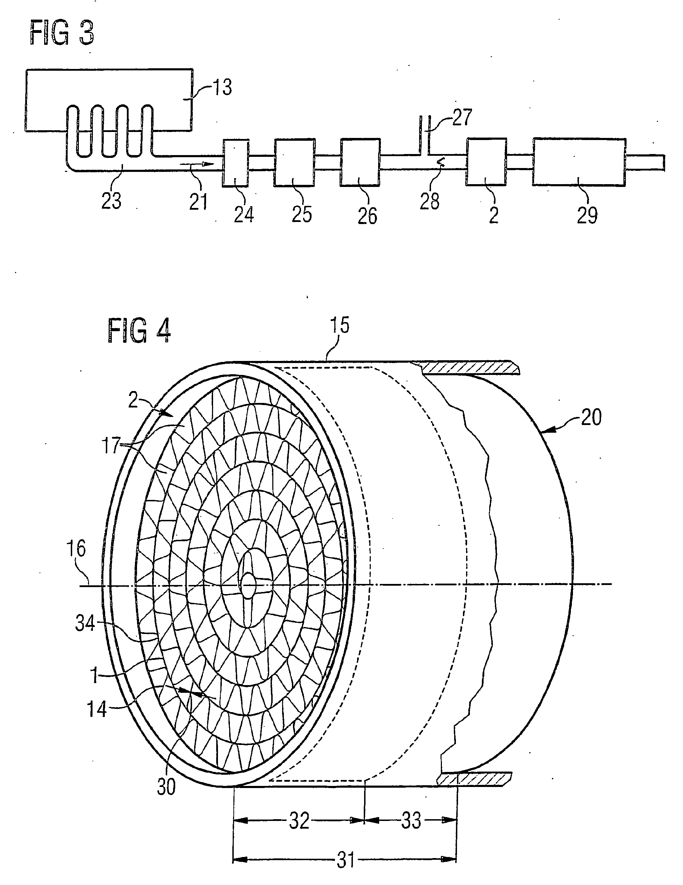

Fig. 3 zeigt schematisch den Aufbau einer Abgasanlage einer automobilen Verbrennungskraftmaschine 13. Das in der Verbrennungskraftmaschine 13 generierte Abgas wird über eine Abgasleitung 23 den unterschiedlichsten Komponenten zur Abgasbehandlung zugeführt, bevor es letztendlich an die Umgebung abgegeben wird. Das Abgassystem, das in Fig. 3 dargestellt ist, weist in Strömungsrichtung 21 hintereinander folgende Komponenten auf: Einen Startkatalysator 24, einen Turbolader 25, einen Oxidationskatalysator 26, eine Reduktionsmittelzufuhr 27, einen Mischer 28, eine erfindungsgemäße Partikelfalle 2 sowie einen Hauptkatalysator 29.

Der Startkatalysator 24 zeichnet sich durch sein besonders kleines Volumen (beispielsweise kleiner 0,1 Liter) aus und ist aufgrund seiner geringen Wärmekapazität und seiner unmittelbaren Nähe zum Motor bereits sehr kurzer Zeit nach einem Motorstart soweit aufgeheizt, dass eine katalytische Umsetzung von im Abgas enthaltenen Schadstoffen möglich ist (z.B. Temperaturen oberhalb von 230°C nach wenigen Sekunden). Die Funktion des Oxidationskatalysators 26 vor einer Partikelfalle 2 zur Regenerierung wurde bereits oben ausführlich erläutert. Die Reduktionsmittelzufuhr 27 und der Mischer 28 dient beispielsweise der Zufuhr von festem oder flüssigen Harnstoff, so dass auch eine Umsetzung von Schadstoffen mit dem SCR-Verfahren möglich ist. Der Mischer 28 kann als Leitfläche, Gitter, Wabenkörper oder in ähnlicher Weise ausgeführt sein. Es ist jedoch auch möglich, den Mischer 28 vor der Partikelfalle 2 wegzulassen, da der Partikelfilter 2 selbst ebenfalls eine Verwirbelung der Abgasströme bzw. eine feine Verteilung des eingeleiteten Reduktionsmittels bewirkt. Der nachgeschaltete Hauptkatalysator 29 weist üblicherweise ein relativ großes Volumen auf, insbesondere größer 1,5 Liter.

Fig. 4 zeigt perspektivisch und schematisch den Aufbau einer Partikelfalle 2. Die Partikelfalle 2 zur Reinigung von Abgasen mobiler Verbrennungskraftmaschinen umfasst eine strukturierte Metallfolie 14 und eine hochtemperaturfeste Faserlage 1, die spiralig um eine Achse 16 der Partikelfalle 2 angeordnet sind (alternativ sind auch einfache Stapelanordnungen, S-förmige Schlingungen oder andere Windungen der Metallfolien und/oder Faserlagen möglich). Die Metallfolie 14 und die Faserlage 1 bilden Kanäle 17, welche sich im wesentlichen parallel zur Achse 16 durch die Partikelfalle 2 hindurch erstrecken. Der Verbund aus Metallfolie 14 und Faserlage 1 ist in einem Gehäuse 15 untergebracht und vorteilhafterweise auch mit diesem fügetechnisch verbunden. Bei der dargestellten Ausführungsform der Partikelfalle 2 ragt das Gehäuse 15 über die Stirnflächen 34 der Partikelfalle 2 bzw. der Metallfolie 14 und der Faserlage 1 hervor. Die Materialstärke 30 der gewellten Metallfolie 14 liegt bevorzugt in einem Bereich unterhalb von 0,05 mm, bevorzugt sogar unterhalb von 0,02 mm. Hierbei bietet sich besonders an, dass die Materialstärke 30 bzw. die Beschichtung 4 (nicht dargestellt), oder andere Parameter der Partikelfalle 2 über die Gesamtlänge 31 der Partikelfalle 2 nicht konstant sind. D. h. beispielsweise, dass die Partikelfalle 2 in einem ersten Längenabschnitt 32 eine geringere Wärmekapazität, eine höhere Porosität, eine größere Beladung hinsichtlich der katalytisch aktiven Beschichtung, eine erhöhte Anzahl/Größe von Durchbrüchen 19, Leitflächen 18 oder Fasern hat, als in einem zweiten Längenabschnitt 33. Grundsätzlich ist die Unterteilung der Partikelfalle 2 in mehr als zwei Längenabschnitte auch möglich.

Die dargestellte Partikelfalle 2 hat ein Volumen 20, welches durch das von der Faserlage 1 und der Metallfolie 14 ausgefüllte Volumen im Inneren des Gehäuses 15 charakterisiert ist, wobei das Volumen der Kanäle 17 ebenfalls umfasst ist. Hinsichtlich der Beschichtung 4 wird die erfindungsgemäße Partikelfalle mit einer solchen Menge versehen, die im Bereich von 20 bis 300 g/l beträgt. Dabei ist es möglich, dass diese Menge über die Gesamtlänge 31 gleichmäßig auf den Außenflächen 9 der Faserlage 1 und/oder der Mantelfolien 14 angeordnet ist, allerdings ist auch möglich, dass nur die Faserlage 1 oder nur Teilbereiche der Metallfolie 14 mit einer katalytisch aktiven Beschichtung 4 versehen sind. Es ist auch möglich, dass in verschiedenen Längenabschnitten unterschiedliche Arten oder Mengen der Beschichtung 4 vorgesehen sind.

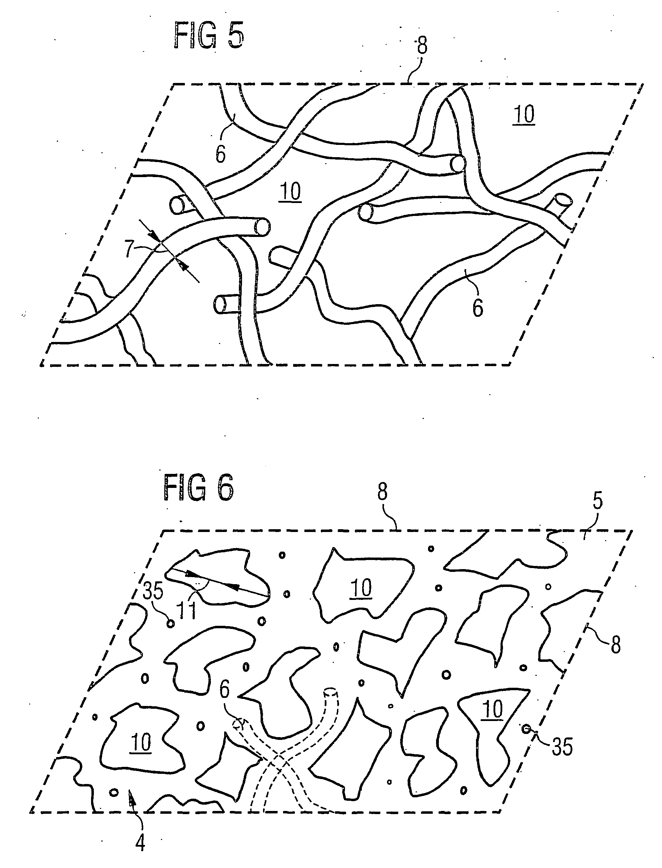

Fig. 5 zeigt schematisch einen Längsschnitt 8 durch die Faserlage 1. Dabei lässt sich erkennen, dass die Faserlage 1 durch eine Vielzahl von Fasern 6 gebildet ist, die hier teils geordnet, teils chaotisch miteinander verbunden sind. Die Fasern 6 weisen bevorzugt einen Durchmesser 7 im Bereich von 0,012 und 0,035 mm auf. Durch die Anordnung der Fasern 6 in dem Längsschnitt 8 werden Öffnungen 10 gebildet. Diese stellen praktisch einen Querschnitt der Hohlräume dar, die im Inneren der Faserlage 1 gebildet sind.

Fig. 6 zeigt schematisch ebenfalls einen Längsschnitt 8 der Faserlage 1, wobei nun die Fasern 6 mit einer Beschichtung 4 ausgeführt sind. Die Beschichtung 4 umfasst Washcoat 5, der aufgrund seiner zerklüfteten Oberfläche ausreichend Möglichkeit zur Anlagerung der katalytisch aktiven Substanzen 35 bildet. Trotz der Beschichtung 4 weist der Längsschnitt 8 immer noch Öffnungen 10 mit einer Ausdehnung 11 auf. Diese Ausdehnung 11 aller Öffnungen 10 beträgt im Mittel zwischen 0,05 und 0,4 mm. Dabei ist bevorzugt gleichzeitig eine Porosität von ca. 87 % einzuhalten.

Die vorliegende Erfindung ist das Ergebnis einer Vielzahl von aufwendigen technischen Versuchen, um die Effektivität von Partikelfallen in Abgassystemen automobiler Verbrennungskraftmaschinen zu verbessern.

### Bezugszeichenliste

- 1: Faserlage
- 2: Partikelfalle
- 3: Abschnitt
- 4: Beschichtung
- 5: Washcoat
- 6: Faser
- 7: Durchmesser
- 8: Längsschnitt
- 9: Außenfläche
- 10: Öffnung
- 11: Ausdehnung
- 12: Dicke
- 13: Verbrennungskraftmaschine
- 14: Metallfolie
- 15: Gehäuse
- 16: Achse
- 17: Kanal
- 18: Leitfläche
- 19: Durchbruch
- 20: Volumen
- 21: Strömungsrichtung
- 22: Partikel
- 23: Abgasleitung
- 24: Startkatalysator
- 25: Turbolader
- 26: Oxidationskatalysator
- 27: Reduktionsmittelzufuhr
- 28: Mischer
- 29: Hauptkatalysator
- 30: Materialstärke
- 31: Gesamtlänge
- 32: Erster Längenabschnitt
- 33: Zweiter Längenabschnitt
- 34: Stirnfläche
- 35: Substanz
- 36: Strukturweite

## Patentansprüche

1. Partikelfalle (2) zur Reinigung von Abgasen mobiler Verbrennungskraftmaschinen (13), wobei diese zumindest eine, zumindest teilweise strukturierte Metallfolie (14) und zumindest eine hochtemperaturfeste Faserlage (1) aus Metallfasern für eine offene Partikelfalle (2) zur Reinigung von Abgasen mobiler Verbrennungskraftmaschinen (13) hat, wobei die Partikelfalle (2) im wesentlichen parallel zu einer Achse (16) der Partikelfalle (2) verlaufende Kanäle (17) hat, wobei Leitflächen (18) der Metallfolien (14) in zumindest einen Teil der Kanäle (17) hineinragen und eine Umlenkung von durch die Kanäle (17) durchströmende Gasströme hin zur Faserlage (1) bewirken und bei der Partikelfalle (2) keine Strömungssackgassen vorgesehen sind, weiterhin die Faserlage (1) zumindest in einem Abschnitt (3) eine katalytisch aktive Beschichtung (4) aufweist, wobei weiter die Beschichtung (4) aus mehreren in Richtung der Achse (16) hintereinander angeordneten Teilbereichen besteht und wobei zumindest ein Teilbereich eine katalytisch aktive Beschichtung (4) eines SCR-Katalysators umfasst.

2. Partikelfalle (2) nach Patentanspruch 1, wobei die Teilbereiche in Strömungsrichtung des Abgases und in Richtung der Achse (16) folgendermaßen aufgeteilt sind:
- Beschichtung eines Hydrolysekatalysators,
- Beschichtung eines SCR-Katalysators.

3. Partikelfalle (2) nach Patentanspruch 2, wobei die Beschichtung eines Oxidationskatalysators in Strömungsrichtung des Abgases und in Richtung der Achse (16) der Beschichtung des Hydrolysekatalysators vorgeschaltet und/oder der Beschichtung des SCR-Katalysators nachgeschaltet ist.

4. Partikelfalle (2) nach einem der vorhergehenden Patentansprüche, wobei mehrere strukturierte Metallfolien und mehrere Faserlagen abwechselnd zueinander und miteinander gewunden in einem Gehäuse angeordnet sind.

5. Partikelfalle (2) nach einem der vorhergehenden Patentansprüche, wobei die Partikelfalle (2) ein Volumen (20) hat, und die Beschichtungsmenge in Bezug auf dieses Volumen im Bereich von 20 bis 300 g/l (Gramm pro Liter) beträgt, bevorzugt sogar zwischen 50 und 120 g/l liegt.

6. Partikelfalle (2) nach einem der vorhergehenden Patentansprüche, wobei die mindestens eine zumindest teilweise strukturierte Metallfolie (14) Durchbrüche (19) aufweist, die sich über mindestens eine Strukturweite (36) erstreckt, vorzugsweise sogar über zwei, insbesondere sogar drei Strukturweiten (36).

7. Partikelfalle (2) nach einem der vorhergehenden Patentansprüche, wobei die Beschichtung (4) Washcoat (5) umfasst.

8. Partikelfalle (2) nach einem der vorhergehenden Patentansprüche, wobei die Faserlage (1) einen porösen Sinter- und/oder Faserwerkstoff umfasst.

9. Partikelfalle (2) nach einem der vorhergehenden Patentansprüche, wobei die Faserlage (1) Fasern (6) mit einem mittleren Durchmesser (7) aufweist, der kleiner als 0,082 mm ist, insbesondere in einem Bereich von 0,01 bis 0,05 mm liegt.

10. Partikelfalle (2) nach einem der vorhergehenden Patentansprüche, wobei die Faserlage (1) eine Porosität hat, die mindestens 50 % beträgt, insbesondere mindestens 75 %, bevorzugt mindestens 85 % und vorzugsweise sogar mindestens 95 %,

11. Partikelfalle (2) nach einem der vorhergehenden Patentansprüche, wobei die Partikelfalle (2) in einem ersten Längenabschnitt (32)
- eine geringere Wärmekapazität,
- eine höhere Porosität,
- eine größere Beladung hinsichtlich der katalytisch aktiven Beschichtung,
- eine erhöhte Anzahl/Größe von Durchbrüchen (19), Leitflächen (18) oder Fasern
hat, als in einem zweiten Längenabschnitt (33),

## Claims

1. Particulate trap (2) for purifying exhaust gases from mobile internal combustion engines (13), wherein it has at least one, at least partially structured metal foil (14) and at least one high-temperature-resistant fiber layer (1) consisting of metal fibers for an open particulate trap (2) for purifying exhaust gases from mobile internal combustion engines (13), wherein the particulate trap (2) has channels (17) running substantially parallel to an axis (16) of the particulate trap (2) are formed, wherein guide surfaces (18) of the metal foils (14) project into at least some of the channels (17) and divert gas streams flowing through the channels (17) toward the fiber layer (1) and in the particulate trap (2) dead ends are not provided, furthermore the fiber layer (1) at least in a section (3) has a catalytically active coating (4), wherein further the coating (4) consists of a plurality of sub-regions, placed one behind the other in direction of the axis (16), and wherein at least one sub-portion comprises a catalytically active coating (4) of an SCR catalyst.

2. Particulate trap (2) according to claim 1, wherein the sub-regions are fragmented in direction of flow of the exhaust gas and in direction of the axis (16) as follows:
- coating of a hydrolytic catalyst,
- coating of a SCR catalyst.

3. Particulate trap (2) according to claim 2, wherein the coating of an oxidation catalyst is arranged upstream of the coating of the hydrolytic catalyst and/or is arranged downstream of the coating of the SCR catalyst in direction of flow of the exhaust gas and in direction of the axis (16).

4. Particulate trap (2) according to one of the preceding claims, wherein multiple structured metal foils and multiple fiber layers are arranged in a housing alternating each other and wound with one another.

5. Particulate trap (2) according to one of the preceding claims, wherein the particulate trap (2) has a volume (20), and the quantity of coating with respect to this volume is in the range from 20 to 300 g/l (grams per liter), preferably even between 50 and 120 g/l.

6. Particulate trap (2) according to one of the preceding claims, wherein the at least one, at least partially structured metal foil (14) has apertures (19) which extend over at least one structure width (36), preferably even over two, in particular even three structure widths (36).

7. Particulate trap (2) according to one of the preceding claims, wherein the coating (4) comprises washcoat (5).

8. Particulate trap (2) according to one of the preceding claims, wherein the fiber layer (1) comprises a porous sintered and/or fiber material.

9. Particulate trap (2) according to one of the preceding claims, wherein the fiber layer (1) includes fibers (6) with a mean diameter (7) which is less than 0.082 mm, in particular in a range from 0.01 to 0.05 mm.

10. Particulate trap (2) according to one of the preceding claims, wherein the fiber layer (1) has a porosity of at least 50%, in particular at least 75%, preferably at least 85% and for preference even at least 95%.

11. Particulate trap (2) according to one of the preceding claims, wherein the particulate trap (2) has in a first longitudinal section (32)
- a lower heat capacity,
- a higher porosity,
- a larger load with respect to the catalytically active coating,
- an increased number/size of apertures (19), guide surfaces (18) or fibers
than in a second longitudinal section (33).

## Revendications

1. Piège à particules (2) pour l'épuration de gaz d'échappement de machines à combustion interne mobiles (13), lesquels ayant au moins une feuille métallique, au moins partiellement structurée (14) et au moins une couche de fibres (1) de fibres métalliques résistante aux températures élevées pour un piège à particules ouvert (2) pour l'épuration de gaz d'échappement de machines à combustion interne mobiles (13), le piège à particules (2) étant muni essentiellement de canaux (17) s'étendant parallèlement par rapport à un axe (16) du piège à particules (2), des surfaces guide (18) des feuilles métalliques (14) se dressant dans au moins une partie des canaux (17) et effectuant une déviation des flux de gaz s'écoulant à travers les canaux (17) jusqu'à la couche de fibres (1) et dans le piège à particules (2) des impasses de flux n'étant pas prévues, la couche de fibres (1) disposant en outre au moins dans une section (3) d'un revêtement à activité catalytique (4), le revêtement (4) étant en outre conçu d'une pluralité de régions partielles agencées les unes derrière les autres en direction de l'axe (16), et au moins une région partielle comprenant un revêtement à activité catalytique (4) étant conçu de plusieurs régions partielles agencées l'une derrière l'autre en direction de l'axe (16) et au moins une région partielle comprenant un revêtement à activité catalytique (4) d'un catalyseur SCR.

2. Piège à particules (2) selon la revendication 1, les régions partielles étant réparties de telle façon en direction d'écoulement du gaz d'échappement et en direction de l'axe (16):
- revêtement d'un catalyseur d'hydrolyse,
- revêtement d'un catalyseur SCR.

3. Piège à particules (2) selon la revendication 2, le revêtement d'un catalyseur d'oxydation étant branché en direction d'écoulement du gaz d'échappement, et en direction de l'axe (16) branché en amont du revêtement du catalyseur d'hydrolyse et/ou branché en aval du revêtement du catalyseur SCR.

4. Piège à particules (2) selon l'une des revendications précédentes, une pluralité de feuilles métalliques structurées et une pluralité de couches de fibres étant entrelacées l'une envers l'autre et l'une avec l'autre de manière alternée.

5. Piège à particules (2) selon l'une des revendications précédentes, le piège à particules (2) ayant un volume (20) et la quantité de revêtement par rapport à ce volume se trouvant dans la gamme de 20 à 300 g/l (grammes par litre), de préférence, même entre 50 et 120 g/l.

6. Piège à particules (2) selon l'une des revendications précédentes, l'au moins une feuille métallique au moins partiellement structurée (14) ayant des percées (19) qui s'étendent sur au moins une largeur de structure (36), de manière préférée même sur deux, notamment même sur trois largeurs de structure (36).

7. Piège à particules (2) selon l'une des revendications précédentes, le revêtement (4) comprenant du washcoat (5).

8. Piège à particules (2) selon l'une des revendications précédentes, la couche de fibres (1) comprenant un matériau fritté et /ou un matériau fibreux.

9. Piège à particules (2) selon l'une des revendications précédentes, la couche de fibres (1) comportant des fibres (6) d'un diamètre moyen (7), qui est plus petit que 0,082 mm, qui se trouve notamment dans une gamme de 0,01 à 0,05 mm.

10. Piège à particules (2) selon l'une des revendications précédentes, la couche de fibres (1) ayant une porosité, qui comporte au moins 50 %, notamment au moins 75 %, de préférence au moins 85 % et de manière préférée même au moins 95 %.

11. Piège à particules (2) selon l'une des revendications précédentes, le piège à particules (2) ayant dans une première section de longueur (32)
- une capacité thermique plus faible,
- une porosité plus élevée,
- un chargement plus élevé quant au revêtement à activité catalytique,
- un nombre/taille plus élevé/ée de percées (19), de surfaces de guidage (18) ou de fibres
que dans une deuxième section de longueur (33).
